(19) **Europäisches Patentamt**

**European Patent Office**

**Office européen des brevets**

(11) **EP 1 251 709 B1**

(12) **EUROPEAN PATENT SPECIFICATION**

(45) Date of publication and mention
of the grant of the patent:
**08.02.2006 Bulletin 2006/06**

(51) Int Cl.:
***H04Q 7/38*** (2006.01)

(21) Application number: **02006908.4**

(22) Date of filing: **26.03.2002**

(54) **Estimating the position of a mobile communications terminal by combining measurements of signals exchanged between the mobile teminal and base stations**

Positionsbestimmung eines Mobilkommunikationsendgeräts aufgrund einer Kombination von Messungen von zwischen dem Mobilkommunikationsendgerät und Basisstationen ausgetauschten Signalen

Localisation d'un terminal de communication mobile par combiner des mesures de signaux échangés entre le terminal et des stations de base

(84) Designated Contracting States:
**AT BE CH CY DE DK ES FI FR GB GR IE IT LI LU MC NL PT SE TR**

(30) Priority: **20.04.2001 KR 2001021456**
**02.06.2001 KR 2001030996**

(43) Date of publication of application:
**23.10.2002 Bulletin 2002/43**

(73) Proprietor: **LG ELECTRONICS INC.**
**Seoul (KR)**

(72) Inventor: **Lee, Yong Woo**
**Andong,**
**Kyongsangbuk-Do (KR)**

(74) Representative: **TER MEER - STEINMEISTER & PARTNER GbR**
**Patentanwälte,**
**Mauerkircherstrasse 45**
**81679 München (DE)**

(56) References cited:
**EP-A- 0 933 961**     **EP-A- 1 030 531**
**WO-A-00/11804**     **WO-A-98/10306**
**US-B1- 6 208 297**

• **DRANE C ET AL: "POSITIONING GSM TELEPHONES" IEEE COMMUNICATIONS MAGAZINE, IEEE SERVICE CENTER. PISCATAWAY, N.J, US, vol. 36, no. 4, 1 April 1998 (1998-04-01), pages 46-54, 58, XP000752570 ISSN: 0163-6804**

**Description**

BACKGROUND OF THE INVENTION

1. Field of the Invention

The present invention relates to an apparatus and a method for estimating position of a mobile communication terminal, and particularly, to an apparatus and a method for estimating position of a mobile communication terminal which are able to improve a plotting function by combining position estimating methods based on a network in a cellular network using CDMA (Code Division Multiple Access).

2. Description of the Background Art

There are various methods for estimating a position of a terminal in a mobile communication system. Among those methods, a method which can be applied to a cellular system based on CDMA (Code Division Multiple Access) can be classified into a method which needs to modify a terminal and a method which does not need to modify a terminal.

A representative method in the above method which needs to modify the terminal is a plotting method based on a terminal, and this method requires a GPS (Global Positioning System) receiver to be installed in a mobile communication terminal carried by a user.

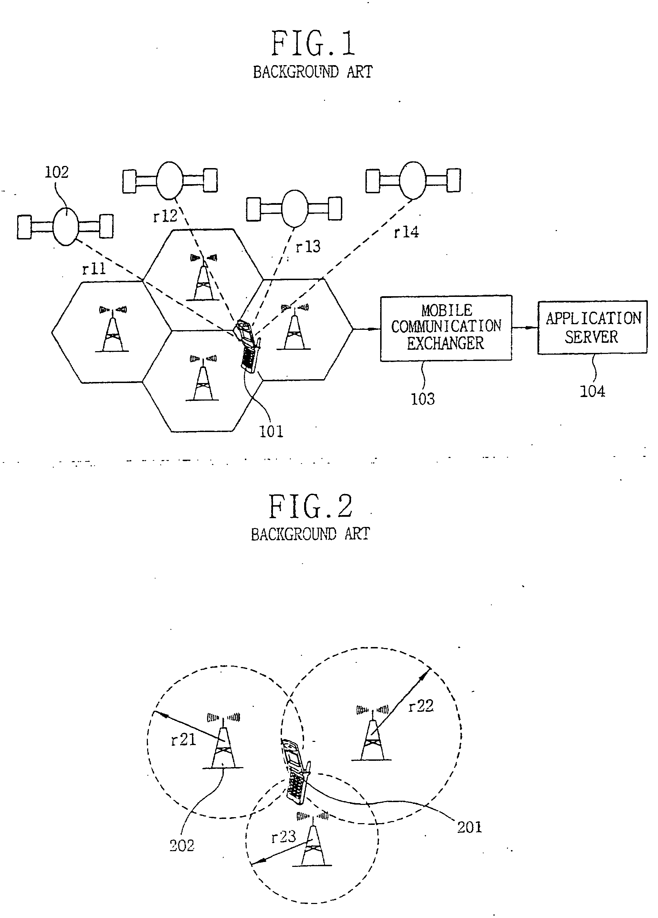

Figure 1 is a view showing a plotting method for a mobile communication terminal using a GPS satellite.

As shown therein, when the GPS receiver 101 is operated by pushing a predetermined button on the mobile communication terminal in order to transmit position information of the mobile communication terminal, the GPS receiver 101 installed in the mobile communication terminal receives a signal from the GPS satellite 102 to calculate distances (r11, r12, r13, and r14) between the mobile communication terminal and respective satellites. At that time, in order to estimate a position on a three dimension, the GPS receiver 101 should receive signals from more than four GPS satellites, and in order to estimate a position on a two dimension, the GPS receiver 101 should receive signals from more than three GPS satellites. A mobile communication exchanger 103 calculates the position of the mobile communication terminal using additional information received from the GPS satellite 102, and after that, the calculated position is automatically transmitted to an application server 104 using the CDMA cellular network.

On the other hand, there is a terminal position estimating method based on a network in the method which does not need to modify the terminal. The above method can be divided into a TOA (Time of Arrival) method using arrival time of a signal transmitted to a respective base station, a TDOA (Time Difference of Arrival) method using arrival time differences of signals of mobile communication terminal transmitted into the respective base station, an AOA (Angle of Arrival) method using arrival angles of signals transmitted into the respective base station, and an RFFP (Radio Frequency Finger Printing) method using an intensity data of a base station signal which is measured by dividing a service area in advance.

Figure 2 is a view showing the TOA method using arrival time of the signal. As shown therein, a plurality of base stations 202 around a mobile communication terminal 201 receive a signal transmitted from the mobile communication terminal 201, and then, the respective base station 202 measures the arrival time of the transmitted signal to calculate distances (r21, r22, and r23) between the mobile communication terminal 201 and the base station 202. And a virtual circle is made centering around the base station 202 as making the distances r21, r22, and r23 as a radius, and then, a position where the circles are crossed to each other are estimated as the position of the mobile communication terminal 201.

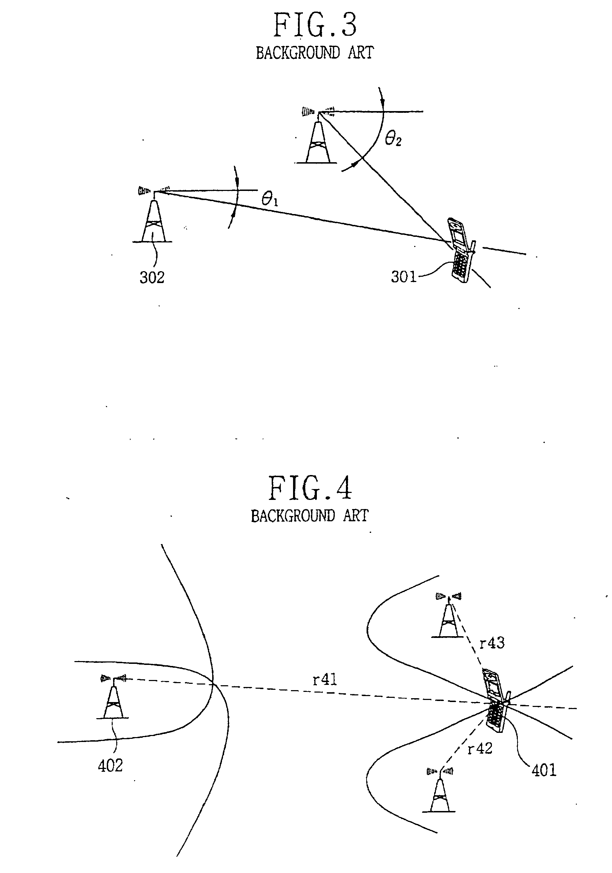

Figure 3 is a view showing the AOA method using an arrival angle of the signal. As shown therein, a plurality of base stations 302 around a mobile communication terminal 301 receive a signal transmitted from the mobile communication terminal 301, and the respective base station 302 measures the arrival angle $(0_1, \theta_2)$ of the transmitted signal. In addition, a virtual line toward the above direction is drawn, and a position where the lines are crossed with each other is estimated as the position of the mobile communication terminal 301.

Figure 4 is a view showing the TDOA method using arrival time difference of a signal. As shown therein, a plurality of base stations 402 around a mobile communication terminal 401 receive a signal transmitted from the mobile communication terminal 401. In addition, distances r41, r42, and r43 are calculated using the arrival time differences of the signal transmitted to the base stations 402, and a hyperbolic curve is drawn using the distances. And a position where the hyperbolic curves are crossed to each other is estimated as the position of the mobile communication terminal 401.

However, according to the position estimating method using the GPS, the GPS receiver should be installed in the terminal additionally, and therefore, producing cost of the mobile communication terminal is increased, a size and a weight of the terminal are increased. In addition, the GPS receiver also uses the power of a battery for the terminal, the power consumption of the terminal is increased.

Also, in the position estimating method using the GPS, the signal transmitted from the GPS satellite is very weakened when the signal is arrived at the terminal on the earth, and therefore it is difficult to receive the GPS signal in case that there are obstacles between the terminal and the GPS satellite such as in an urban area or indoor, whereby the function is lowered.

On the other hand, the network based position estimating method which does not need to modify the terminal does not require an additional cost because the GPS receiver is not installed in the mobile communication terminal, and the conventional CDMA cellular network can be used as it is.

However, the TOA method using the arrival time and the TDOA method using the arrival time difference should use at least three base stations around the mobile communication terminal, and the AOA method using the arrival angle also should use at least two base stations. However, if the user is in a suburban area, there is little chance that there are two or three base station around the user.

Mostly, there is only a base station included in a cell where the user is located, and the other base stations are located far from the user. Therefore, the signal from the mobile communication terminal is difficult to reach the other base stations, and even if the signal arrives at the other base stations, the signal is very weak and there may be a lot of error. Therefore, it is difficult to estimate the position of the mobile communication terminal.

As described above, it is difficult to estimate the position of the mobile communication terminal using only one estimating method using such as the arrival time, arrival angle, or arrival time difference of signal in a suburban area.

WO 98/10306 discloses a method and apparatus for location finding in a communication system. Here, the distance between a subscriber location, i.e. a mobile terminal, at two base stations are determined to result in two circles each drawn around a base station. In addition, angle information is used to decide at which intersection of the two circles the subscriber terminal is located.

C. Drane et al. "Positioning GSM Telephones, ...", discloses several methods for estimating the position of a mobile terminal using TOA, TDOA and AOA measurements. One method combines range and angle measurements.

EP 0 933 961 A2 discloses a method and arrangement for locating a mobile station. The location is estimated on the basis of angle of arrival measurements, time difference measurements and transition time measurements for signals transmitted by a mobile station, or subscriber unit.

EP 1 030 531 A1 discloses a method for combining multiple measurements to determine the position of a mobile transeiver. In particular, it is taught to combine multiple estimated locations which are based on information such as time difference of arrival, time of arrival, and angle of arrival.

WO 00/11804 is concerned with a system and a method for measuring and locating a mobile station signal in a wireless communication system and discloses the use of both time of arrival and angle of arrival measurements.

US 6,208,297, shows that different methods for estimating the position of a mobile terminal are known and combined for location and velocity measurements.

Summary of the invention

Therefore, an object of the present invention is to provide a method and an apparatus for estimating position of a mobile communication terminal which is able to improve the position estimating function using network based position estimating methods in a cellular network using CDMA (code division multiple access) technology.

This object is achieved by the method according to claim 1 and the apparatus according to claim 3.

The foregoing and other objects, features, aspects and advantages of the present invention will become more apparent from the following detailed description of the present invention when taking in conjunction with the accompanying drawings.

BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

Figure 1 is a view showing a position estimating system for a mobile communication terminal using a GPS satellite according to the conventional art;
Figure 2 is a view showing a position estimating method for the mobile communication terminal using an arrival time according to the conventional art;
Figure 3 is a view showing a position estimating method for the mobile communication terminal using an arrival angle according to the conventional art;
Figure 4 is a view showing a position estimating method for the mobile communication terminal using an arrival time difference according to the conventional art;
Figure 5 is a view showing a position estimating apparatus for the mobile communication terminal according to the present invention;
Figure 6 is a view showing an embodiment of a position estimating method for the mobile communication terminal according to the present invention;
Figure 7 is a view showing the embodiment of the position estimating method for the mobile communication terminal according to the present invention;
Figure 8 is a view showing an example of a position estimating method for a mobile communication terminal; and
Figure 9 is a view showing an example of a position estimating method for a mobile communication terminal.

DETAILED DESCRIPTION OF THE PREFERRED EMBODIMENTS

Reference will now be made in detail to the preferred embodiment of the present invention, examples of which are illustrated in the accompanying drawings.

When a mobile communication service provider is about to provide a transport company with a car navigation service, the mobile communication service provider transmits a message requiring position information of a car to a mobile communication terminal in the car with a predetermined time interval. The mobile communication terminal which received the position requiring message originates a certain signal to make a base station around the terminal receive the signal. The base station around the terminal calculates the position of the terminal by a position estimating method using an arrival time difference, an arrival angle, or an arrival time of the signal through the signal received by the base station.

The position estimating method using the arrival time difference will be described in detail with reference to Figure 4.

The arrival time difference is used as follows. An arrival time difference between a signal transmitted to a base station 402 presently serving a mobile communication terminal 401 and a signal transmitted to another base station 402 is calculated, and an equation of a hyperbola is made using the above calculation result.

$$r_i^2 = (x_i - x)^2 + (y_i - y)^2 \qquad \text{------- (equation 1)}$$

$$r_{i,1} = cd_{i,1} = r_i - r_1 \qquad \text{------- (equation 2)}$$

The above equations 1 and 2 are hyperbola equations, x and y represent coordinates of the mobile communication terminal 401 which is wanted to be calculated, $x_i$ and $y_i$ represent coordinates of i-th base station 402, and $d_i$ represents a difference between an arrival time of the signal transmitted to the first base station 402 and the arrival time of the signal transmitted to the i-th base station 402.

That is, in case that the position of the mobile communication terminal 401 is calculated using three base stations, the coordinates of the x and y can be calculated as following equation 3.

$$\begin{bmatrix} x \\ y \end{bmatrix} = -\begin{bmatrix} x_{2,1} & y_{2,1} \\ x_{3,1} & y_{3,1} \end{bmatrix}^{-1} \times \left\{ \begin{bmatrix} r_{2,1} \\ r_{3,1} \end{bmatrix} r_1 + \frac{1}{2} \begin{bmatrix} r_{2,1}^2 - K_2 + K_1 \\ r_{3,1}^2 - K_3 + K_1 \end{bmatrix} \right\} \qquad \text{----- (equation 3)}$$

In the above equation, $K_i$ represents $x_i^2 + y_i^2$, and $x_{i,1}$ represents $x_i - x_1$,

In addition, in order to calculate the position of the terminal using the arrival angle, an array antenna system is installed on the respective base station to find the angle of signal when it is transmitted to the base station. And then, a virtual line toward the arrival angle of the signal is drawn, and a position where the lines are crossed to each other is estimated as the position of the terminal.

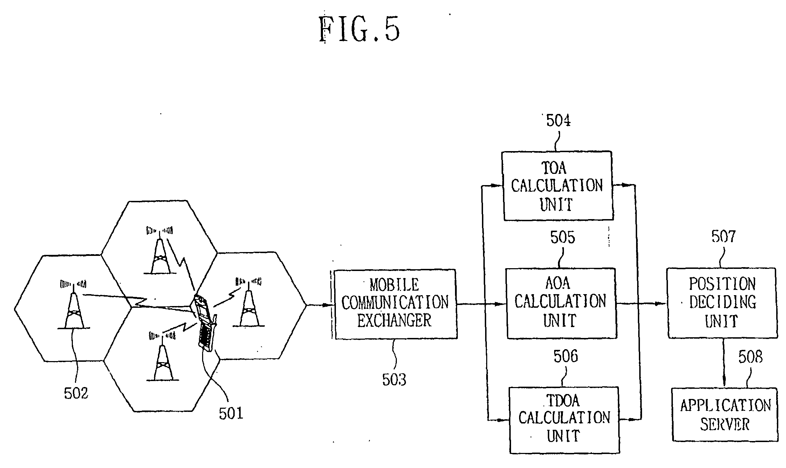

Figure 5 is a view showing a position estimating system according to the present invention.

As shown therein, the position estimating system for the mobile communication terminal according to the present invention comprises: a mobile communication exchanger 503 for receiving a signal transmitted/received between a mobile communication terminal 501 and a respective base station 502; a time of arrival (TOA) calculation unit 504 for calculating a distance between the mobile communication terminal 501 and the base station using an arrival time of the signal which is received through the mobile communication exchanger 503; an angle of arrival (AOA) calculation unit 505 for calculating an arrival direction of the terminal 501 from the signal received by the mobile communication exchanger 503; a time difference of arrival (TDOA) calculation unit 506 for calculating a distance between the terminal 501 and the base station 502 using the arrival time difference of the signal received through the mobile communication exchanger 503; a position deciding unit 507 for deciding the position calculated in the TOA calculation unit 504 and the AOA calculation unit 505 or the position calculated in the arrival time difference unit 506 and the AOA calculation unit 505 as the position of the mobile communication terminal 501; and an application server 508 which requires the position information of the mobile communication terminal 501.

The mobile communication exchanger 503 selectively transmits the signal received by the base station to the respective calculation unit among the base station 502, the TOA calculation unit 504, the AOA calculation unit 505, and the arrival time difference unit 506.

The position deciding unit 507 draws an extended line toward the direction calculated in the AOA calculation unit 505 on a virtual circle making the distance calculated in the TOA calculation unit 504 as a radius. In addition, the position deciding unit 506 decides a position where the circle and the extended line are crossed to each other as the position of the terminal 501, or estimate the position of the terminal through the TDOA calculation unit 506 and the AOA calculation unit 505.

The position estimating system for the mobile communication terminal is operated as follows.

The position signal of the terminal 501 transmitted to the base station 502 of the cell where the terminal 501 is located and to the other base stations 502. around the terminal 501 is transmitted to the mobile communication exchanger 503, and the mobile communication exchanger 503 estimates the position of the terminal 501 via the TOA calculation unit 504, the AOA calculation unit 505, and the arrival time difference unit 506 centering around the respective base station 502 using the transmitted signal.

The position deciding unit 507 estimates a plurality of virtual positions for the mobile communication terminal 501, after that, the position deciding unit 507 decides on the final position of the terminal 501. And the decided final position is automatically transmitted to the application server 508 which requires the position information of the terminal 501 using the CDMA cellular network.

An embodiment of the position estimating method using the above position estimating system for the mobile communication terminal according to the present invention will be described as follows.

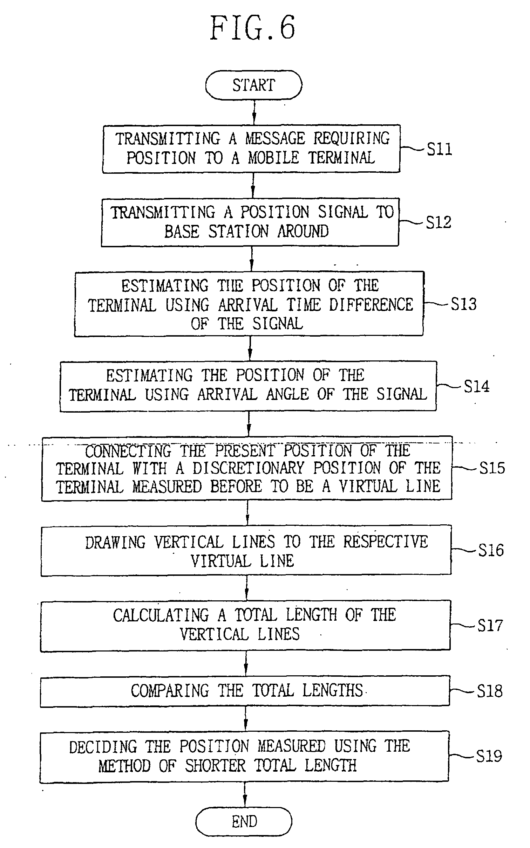

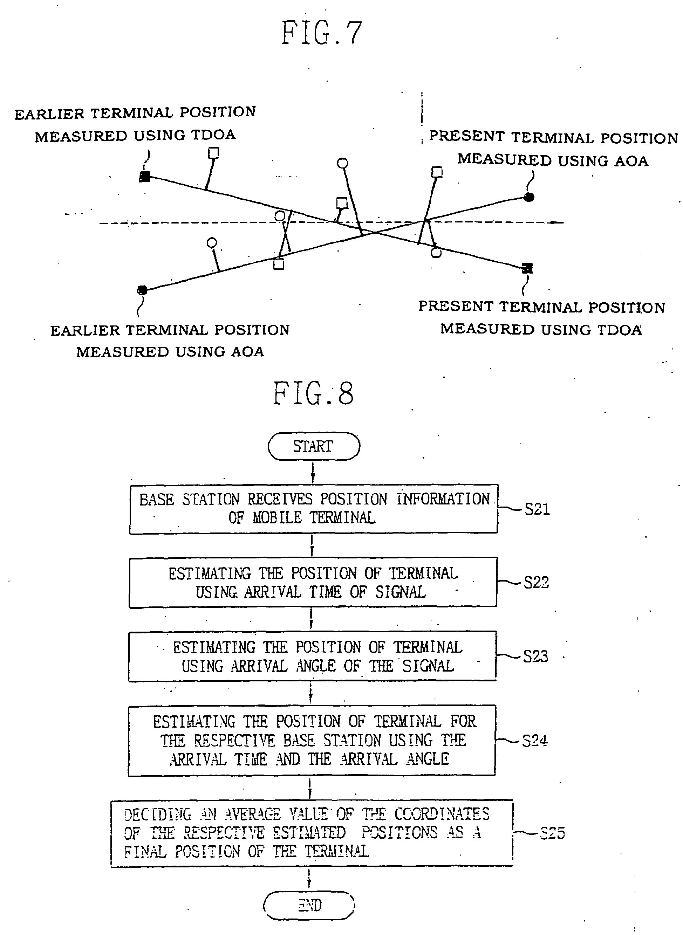

Figure 6 is a flow chart showing the position estimating method for the mobile communication terminal according to the present invention, and Figure 7 is a view showing the embodiment of the position estimating method according to the present invention.

As shown in Figure 6, whenever the mobile communication provider transmits a message for requiring the position of the car to the mobile terminal 501 in the respective car (S11), the mobile terminal 501 transmits a predetermined signal which is set in advance (S12). In addition, the system estimates the position of the mobile terminal 501 using the signal by the position estimating method using the arrival time difference (TDOA) and the arrival angle (AOA)(S13 and S14).

The position estimating system of the mobile terminal selects one, which is expected to be closest position from the real position of the terminal, between the two position values of the terminal which are calculated using the above two methods.

That is, as shown in Figure 7, the virtual x-y coordinate of the mobile terminal 501 measured at present and the virtual x-y coordinate of the mobile terminal 501 measured an optional time earlier are connected to be a virtual line (S15).

Therefore, a virtual line made by the arrival time difference, and a virtual line made by the arrival angle are drawn. At that time, the virtual line connects the position of mobile terminal 501 measured at present to the position of the mobile terminal 501 measured earlier. That is, four estimated positions are around the virtual line, and vertical lines from the above four positions are drawn toward the virtual line (S16).

In addition, a total length of the vertical lines from the four positions toward the virtual line is calculated respectively (S17).

The total length of the vertical lines in the method using the arrival time difference and the total length of the vertical lines in the method using the arrival angle are compared (S18).

Then, the present position of the mobile terminal 501 measured by the method of shorter total length after comparing the lengths is decided as the position of the mobile terminal 501 (S19). That is, if the total length of the vertical lines drawn from the positions measured using the arrival time difference is shorter than the total length of the vertical lines drawn from the positions measured using the arrival angle, the final position calculated by the arrival time difference is decided as the present position of the mobile terminal 501.

As the method described above, a position which is the closest position to the actual moving path can be measured even the mobile terminal is moving.

The position calculated as the above method is automatically transmitted to the application server 508 which requires the position information of the mobile terminal user through the CDMA cellular network.

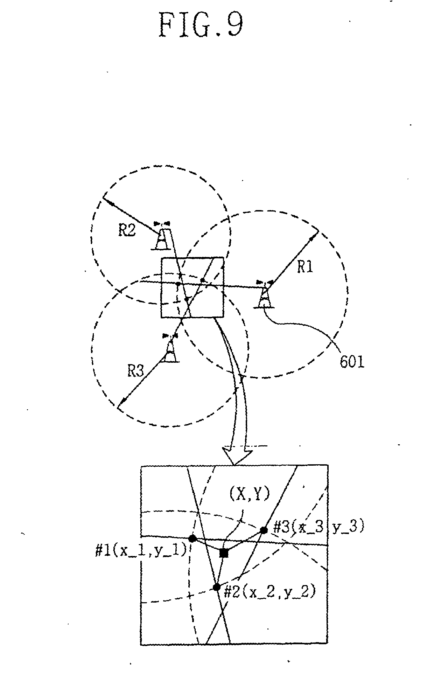

Figure 8 is a flow chart showing an example of a position estimating method for a mobile communication terminal useful for understanding the invention, and Figure 9 is a view showing the carried result of the position estimating method according to the example.

The example of a position estimating method will be described with reference to Figures 8 and 9 as follows.

When the mobile terminal 501 transmits a certain signal for notifying the present position of the terminal, the base station 502 in the cell where the terminal 501 is located and the other base stations 502 around the cell receive the signal (S21).

The signals notifying the positions are transmitted to the TOA calculation unit 504 and the AOA calculation unit 505 through the mobile communication exchanger 503.

The TOA calculation unit 504 processes the signal transmitted into the respective base station and calculates the times when the signal transmitted from the mobile terminal 501 arrives at the respective base stations (S22). If the cell is large and therefore the distance between the base stations are very far like in the suburban area, only the arrival angle of the signal calculated by the antenna system installed on the base station of the cell where the user is located is transmitted to the AOA calculation unit 505.

The position estimating processes using the arrival time data and the arrival angle data calculated as above will be described with reference to Figure 9 as follows.

At first, a virtual circle having a radius R1 is drawn centering around a first base station 601 using the arrival time and the arrival angle of the mobile terminal signal for the first base station 601, and a virtual line is drawn toward the arrival angle direction. In addition, a position where the virtual circle and the virtual line are crossed of the first base station 601 is set as a first estimated position of the mobile terminal #1($x\_1$, $y\_1$).

As the above method, the estimated position #N($x\_N$, $y\_N$) by the respective base station is set using a pair of the arrival time and the arrival angle of the signal (S24).

An average value of x coordinates (($x\_1$+$x\_2$+....$x\_N$)/N) and an average value of y coordinates (($y\_1$+$y\_2$+....+$y\_N$)/N) for the respective estimated position (#1~#N) set in the above process are found, and then, the above average coordinate value (X,Y) is decided as the final position of the mobile communication terminal (S25).

In the example three estimated positions (#1, #2, and #3) are set by three base stations, and the final position of the mobile terminal is decided as (($x\_1$+$x 2$+$x\_3$)/3), (($y\_1$+$y\_2$+$y\_3$)/3).

The position calculated as above is automatically transmitted to the application server 508 which requires the position information of the user using the CDMA cellular network.

As described above, according to the position estimating apparatus and method for a mobile communication terminal of the present invention, the position estimating of the mobile terminal can be performed using the arrival angle, the arrival time, and the arrival time difference of the signal even in the suburban area where a plurality of base stations can not be available. In addition, exact position estimating can be made when the mobile terminal is moving in a car.

Also, according to the position estimating apparatus and method for the mobile communication terminal of the present invention, the position estimating function of the mobile terminal can be improved in a proportion to the number of base stations which receive the signal of the mobile terminal in the urban area where a plurality of base stations are available.

**Claims**

1. A position estimating method for a mobile communication terminal (501) comprising the steps of:

   - measuring positions of a mobile communication terminal using an arrival angle of a signal between the mobile communication terminal and a base station (514);
   - measuring positions of the mobile communication terminal using an arrival time difference of the signal between the mobile communication terminal and the base station (513);
   - connecting the present position of the mobile communication terminal with an earlier position thereof both measured using the arrival angle of the signal by a virtual line (515).
   - connecting the present position of the mobile communication terminal with an earlier position thereof both measured using the arrival time difference of the signal by a virtual line (515);
   - drawing vertical lines from intermediate positions of the mobile communication terminal measured using the arrival angle of the signal to the corresponding virtual line (516).
   - drawing vertical lines from intermediate positions of the mobile communication terminal measured using the arrival time difference of the signal to the corresponding virtual line (516);
   - finding a total length of the distances of the intermediate positions measured using the arrival angle of the signal from the respective virtual line by adding the length of the vertical lines (517);
- finding a total length of the distances of the intermediate positions measured using the arrival time difference of the signal from the respective virtual line by adding the length of the respective vertical lines (517); and
- comparing the total lengths (518) and deciding (519) the position of the mobile communication terminal (501) measured by the method having the shorter total length as the final position of the mobile communication terminal (501).

2. A position estimating method according to claim 1, chracterized in that the steps of measuring positions of a mobile communication terminal are performed with a predetermined time interval.

3. A position estimating apparatus for a mobile communication terminal (501) comprising:

- a mobile communication exchanger (503) for receiving a signal transmitted/received between the mobile communication terminal (501) and a respective base station (502);
- an angle of arrival AOA calculating unit (505) for measuring positions of the mobile communication terminal (501) using an arrival angle of a signal between the mobile terminal (501) and a base station (502);
- a time difference of arrival TDOA calculating unit (506) for measuring positions of the mobile communication terminal using an arrival time difference of the signal between the mobile communication terminal (501) and a base station (502); and
- a position deciding unit (507) for deciding a position by

-- connecting the present position of the mobile communication terminal (501) with an earlier position thereof both measured using the arrival angle of the signal by a virtual line;
-- connecting the present position of the mobile communication terminal (501) with an earlier position thereof both measured using the arrival time difference of the signal by a virtual line;
-- drawing vertical lines from intermediate positions of the mobile communication terminal (501) measured using the arrival angle of the signal to the corresponding virtual line;
-- drawing vertical lines from intermediate positions of the mobile communication terminal (501) measured using the arrival time difference of the signal to the corresponding virtual line;
-- finding a total length of the distances of the intermediate positions measured using the arrival angle of the signal from the respective virtual line by adding the length of the vertical lines;
-- finding a total length of the distances of the intermediate positions measured using the arrival time difference of the signal from the respective virtual line by adding the length of the respective vertical lines; and
-- comparing the total lengths and deciding the position of the mobile communication terminal (501) measured by the method having the shorter total length as the final position of the mobile communication terminal (501).

## Patentansprüche

1. Positionsschätzverfahren für ein Mobilkommunikations-Endgerät (501), das die folgenden Schritte umfasst:

- Messen von Positionen eines Mobilkommunikations-Endgeräts unter Verwendung eines Ankunftswinkels eines Signals zwischen dem Mobilkommunikations-Endgerät und einer Basisstation (514);
- Messen von Positionen des Mobilkommunikations-Endgeräts unter Verwendung einer Ankunftszeitdifferenz des Signals zwischen dem Mobilkommunikations-Endgerät und der Basisstation (513);
- Verbinden der momentanen Position des Mobilkommunikations-Endgeräts mit einer früheren Position hiervon, die beide unter Verwendung des Ankunftswinkels des Signals gemessen werden, durch eine virtuelle Linie (515);
- Verbinden der momentanen Position des Mobilkommunikations-Endgeräts mit einer früheren Position hiervon, die beide unter Verwendung der Ankunftszeitdifferenz des Signals gemessen werden, durch eine virtuelle Linie (515);
- Ziehen vertikaler Linien von Zwischenpositionen des Mobilkommunikations-Endgeräts, die unter Verwendung des Ankunftswinkels des Signals gemessen werden, zu der entsprechenden virtuellen Linie (516);
- Ziehen vertikaler Linien von Zwischenpositionen des Mobilkommunikations-Endgeräts, die unter Verwendung der Ankunftszeitdifferenz des Signals gemessen werden, zu der entsprechenden virtuellen Linie (516);
- Ermitteln einer Gesamtlänge der Abstände der unter Verwendung des Ankunftswinkels des Signals gemessen Zwischenpositionen von der entsprechenden virtuellen Linie durch Addieren der Länge der vertikalen Linien (517);

- Ermitteln einer Gesamtlänge der Abstände der unter Verwendung der Ankunftszeitdifferenz des Signals gemessenen Zwischenpositionen von der entsprechenden virtuellen Linie durch Addieren der Länge der entsprechenden vertikalen Linien (517); und
- Vergleichen der Gesamtlängen (518) und Bestimmen (519) jener durch das Verfahren gemessenen Position des Mobilkommunikations-Endgeräts (501), die die kürzere Gesamtlänge hat, als die endgültige Position des Mobilkommunikations-Endgeräts (501).

2. Positionsschätzverfahren nach Anspruch 1, **dadurch gekennzeichnet, dass** die Schritte des Messens von Positionen eines Mobilkommunikations-Endgeräts in einem vorgegebenen Zeitintervall ausgeführt werden.

3. Positionsschätzvorrichtung für ein Mobilkommunikations-Endgerät (501), die umfasst:

- eine Mobilkommunikations-Austauschvorrichtung (503), die ein Signal empfängt, das zwischen den Mobilkommunikations-Endgerät (501) und einer entsprechenden Basisstation (502) gesendet/empfangen wird;
- eine Ankunftswinkel-Berechnungseinheit (AOA-Berechnungseinheit) (505) zum Messen von Positionen des Mobilkommunikations-Endgeräts (501) unter Verwendung eines Ankunftswinkels eines Signals zwischen dem Mobilkommunikations-Endgerät (501) und einer Basisstation (502);
- eine Ankunftszeitdifferenz-Berechnungseinheit (TDOA-Berechnungseinheit) (506) zum Messen von Positionen des Mobilkommunikations-Endgeräts unter Verwendung einer Ankunftszeitdifferenz des Signals zwischen dem Mobilkommunikations-Endgerät (501) und einer Basisstation (502); und
- eine Positionsbestimmungseinheit (507) zum Bestimmen einer Position durch

-- Verbinden der momentanen Position des Mobilkommunikations-Endgeräts (501) mit einer früheren Position hiervon, die beide unter Verwendung des Ankunftswinkels des Signals gemessen werden, durch eine virtuelle Linie;
-- Verbinden der momentanen Position des Mobilkommunikations-Endgeräts (501) mit einer früheren Position hiervon, die beide unter Verwendung der Ankunftszeitdifferenz des Signals gemessen werden, durch eine virtuelle Linie;
-- Ziehen vertikaler Linien von Zwischenpositionen des Mobilkommunikations-Endgeräts (501), die unter Verwendung der Ankunftszeitdifferenz des Signals gemessen werden, zu der entsprechenden virtuellen Linie;
-- Ermitteln einer Gesamtlänge der Abstände der unter Verwendung des Ankunftswinkels des Signals gemessenen Zwischenpositionen von der entsprechenden virtuellen Linie durch Addieren der Länge der vertikalen Linien;
-- Ermitteln einer Gesamtlänge der Abstände der unter Verwendung der Ankunftszeitdifferenz des Signals gemessenen Zwischenpositionen4 von der entsprechenden virtuellen Linie durch Addieren der Längen der entsprechenden virtuellen Linien; und
-- Vergleichen der Gesamtlängen und Bestimmen jener durch das Verfahren gemessenen Position des Mobilkommunikations-Endgeräts (501), die die kürzere Gesamtlänge hat, als die endgültige Position des Mobilkommunikations-Endgeräts (501).

**Revendications**

1. Un procédé d'évaluation de position, pour un terminal de communication mobile (501), comprenant les étapes consistant à :

- mesurer les positions d'un terminal de communication mobile en utilisant un angle d'arrivée d'un signal entre le terminal de communication mobile et une station de base (514) ;
- mesurer les positions du terminal de communication mobile en utilisant une différence entre les heures d'arrivée du signal entre le terminal de communication mobile et la station de base (513) ;
- associer la position actuelle du terminal de communication mobile à une position précédente de celui-ci, les deux étant mesurées en utilisant l'angle d'arrivée du signal, par une ligne virtuelle (515) ;
- associer la position actuelle du terminal de communication mobile à une position précédente de celui-ci, les deux étant mesurées en utilisant la différence entre les heures d'arrivée du signal, par une ligne virtuelle (515) ;
- tracer des lignes verticales à partir des positions intermédiaires du terminal de communication mobile mesurées en utilisant l'angle d'arrivée du signal par rapport à la ligne virtuelle correspondante (516) ;
- tracer des lignes verticales à partir des positions intermédiaires du terminal de communication mobile mesurées en utilisant la différence entre les heures d'arrivée du signal par rapport à la ligne virtuelle correspondante (516) ;
- trouver une longueur totale des distances des positions intermédiaires mesurées en utilisant l'angle d'arrivée du signal à partir de la ligne virtuelle respective, en additionnant la longueur des lignes verticales (517) ;
- trouver une longueur totale des distances des positions intermédiaires mesurées en utilisant la différence entre les heures d'arrivée du signal à partir de la ligne virtuelle respective, en additionnant la longueur des lignes verticales (517) respectives ; et
- comparer les longueurs totales (518), et décider (519) de la position du terminal de communication mobile (501) mesurée par le procédé ayant la position finale de terminal de communication mobile (501) correspondant à la longueur totale la plus courte.

2. Un procédé d'évaluation de position selon la revendication 1, **caractérisé en ce que** les étapes de mesure des positions d'un terminal de communication mobile sont effectuées suivant un intervalle de temps prédéterminé.

3. appareil d'évaluation de position, pour un terminal de communication mobile (501), comprenant :

- un commutateur de communication mobile (503) pour recevoir un signal émis/reçu entre le terminal de communication mobile (501) et une station de base respective (502) ;
- une unité de calcul d'angle d'arrivée AOA (505) pour mesurer les positions du terminal de communication mobile (501) en utilisant un angle d'arrivée d'un signal entre le terminal de communication mobile (501) et une station de base (502) ;
- une unité de calcul de différence entre les heures d'arrivée TDOA (506) pour mesurer les positions du terminal de communication mobile en utilisant une différence entre les heures d'arrivée du signal entre le terminal de communication mobile (501) et une station de base (502) ; et
- une unité de décision de position (507) pour décider d'une position en :

- associant la position actuelle du terminal de communication mobile (501) à une position précédente de celui-ci, les deux étant mesurées en utilisant l'angle d'arrivée du signal, par une ligne virtuelle ;
- associant la position actuelle du terminal de communication mobile (501) à une position précédente de celui-ci, les deux étant mesurées en utilisant la différence entre les heures d'arrivée du signal, par une ligne virtuelle ;
- traçant des lignes verticales à partir des positions intermédiaires du terminal de communication mobile (501), mesurées en utilisant l'angle d'arrivée du signal par rapport à la ligne virtuelle correspondante ;
- traçant des lignes verticales à partir des positions intermédiaires du terminal de communication mobile (501), mesurées en utilisant la différence entre les heures d'arrivée du signal par rapport à la ligne virtuelle correspondante ;
- trouvant une longueur totale des distances des positions intermédiaires mesurées en utilisant l'angle d'arrivée du signal à partir de la ligne virtuelle respective, en additionnant la longueur des lignes verticales ;
- trouvant une longueur totale des distances des positions intermédiaires mesurées en utilisant la différence entre les heures d'arrivée du signal à partir de la ligne virtuelle respective, en additionnant la longueur des lignes verticales respectives ; et
- comparant les longueurs totales et en décidant de la position du terminal de communication mobile (501) mesurée par le procédé ayant la position finale de terminal de communication mobile (501) correspondant à la longueur totale la plus courte.

# FIG.1
BACKGROUND ART

# FIG.2
BACKGROUND ART

# FIG.3
### BACKGROUND ART

# FIG.4
### BACKGROUND ART

# FIG.5

EP 1 251 709 B1

# FIG.6

```
                    ( START )
                        │
                        ▼
        ┌─────────────────────────────────┐
        │ TRANSMITTING A MESSAGE REQUIRING │ ──S11
        │   POSITION TO A MOBILE TERMINAL  │
        └─────────────────────────────────┘
                        │
                        ▼
        ┌─────────────────────────────────┐
        │  TRANSMITTING A POSITION SIGNAL TO│ ──S12
        │      BASE STATION AROUND         │
        └─────────────────────────────────┘
                        │
                        ▼
    ┌─────────────────────────────────────────┐
    │      ESTIMATING THE POSITION OF THE      │
    │ TERMINAL USING ARRIVAL TIME DIFFERENCE   │ ──S13
    │             OF THE SIGNAL                │
    └─────────────────────────────────────────┘
                        │
                        ▼
    ┌─────────────────────────────────────────┐
    │       ESTIMATING THE POSITION OF THE     │ ──S14
    │ TERMINAL USING ARRIVAL ANGLE OF THE SIGNAL│
    └─────────────────────────────────────────┘
                        │
                        ▼
    ┌─────────────────────────────────────────┐
    │   CONNECTING THE PRESENT POSITION OF THE │
    │ TERMINAL WITH A DISCRETIONARY POSITION OF THE│ ──S15
    │ TERMINAL MEASURED BEFORE TO BE A VIRTUAL LINE│
    └─────────────────────────────────────────┘
                        │
                        ▼
    ┌─────────────────────────────────────────┐
    │  DRAWING VERTICAL LINES TO THE RESPECTIVE│ ──S16
    │             VIRTUAL LINE                 │
    └─────────────────────────────────────────┘
                        │
                        ▼
    ┌─────────────────────────────────────────┐
    │     CALCULATING A TOTAL LENGTH OF THE    │ ──S17
    │             VERTICAL LINES               │
    └─────────────────────────────────────────┘
                        │
                        ▼
    ┌─────────────────────────────────────────┐
    │       COMPARING THE TOTAL LENGTHS        │ ──S18
    └─────────────────────────────────────────┘
                        │
                        ▼
    ┌─────────────────────────────────────────┐
    │  DECIDING THE POSITION MEASURED USING THE│ ──S19
    │     METHOD OF SHORTER TOTAL LENGTH       │
    └─────────────────────────────────────────┘
                        │
                        ▼
                    ( END )
```

# FIG.7

EARLIER TERMINAL POSITION
MEASURED USING TDOA

PRESENT TERMINAL POSITION
MEASURED USING AOA

EARLIER TERMINAL POSITION
MEASURED USING AOA

PRESENT TERMINAL POSITION
MEASURED USING TDOA

# FIG.8

START

BASE STATION RECEIVES POSITION INFORMATION OF MOBILE TERMINAL — S21

ESTIMATING THE POSITION OF TERMINAL USING ARRIVAL TIME OF SIGNAL — S22

ESTIMATING THE POSITION OF TERMINAL USING ARRIVAL ANGLE OF THE SIGNAL — S23

ESTIMATING THE POSITION OF TERMINAL FOR THE RESPECTIVE BASE STATION USING THE ARRIVAL TIME AND THE ARRIVAL ANGLE — S24

DECIDING AN AVERAGE VALUE OF THE COORDINATES OF THE RESPECTIVE ESTIMATED POSITIONS AS A FINAL POSITION OF THE TERMINAL — S25

END

# FIG.9